# EUROPEAN PATENT SPECIFICATION

(11) **EP 2 823 887 B1**
(45) Date of publication and mention of the grant of the patent: **02.12.2020**
(21) Application number: 13757647.6
(22) Date of filing: 17.01.2013
(51) Int. Cl.: B01J 23/89, B01D 53/94, F01N 3/10, B01J 35/10, B01J 23/83

(54) **OXIDATION CATALYST AND EXHAUST GAS PURIFICATION METHOD USING SAME**
OXIDATIONSKATALYSATOR UND ABGASREINIGUNGSVERFAHREN DAMIT
CATALYSEUR D'OXYDATION ET PROCÉDÉ DE PURIFICATION DE GAZ D'ÉCHAPPEMENT UTILISANT CELUI-CI

(30) Priority: 05.03.2012 JP 2012047985
(43) Date of publication of application: 14.01.2015
(73) Proprietor: TOYOTA JIDOSHA KABUSHIKI KAISHA, Toyota-shi, Aichi-ken, 471-8571 (JP)
(72) Inventor: KIKUGAWA Masashi, Nagakute-shi Aichi 480-1192 (JP); YAMAZAKI Kiyoshi, Nagakute-shi Aichi 480-1192 (JP); SOBUE Yuichi, Toyota-shi Aichi 471-8571 (JP)
(74) Representative: J A Kemp LLP
(86) International application number: PCT/JP2013/050827
(87) International publication number: WO 2013/132895

(56) References cited:
- EP-A1- 0 092 023
- EP-A1- 1 787 720
- JP-A- H08 131 778
- JP-A- H08 168 650
- US-A1- 2007 204 870
- US-A1- 2011 143 921
- AVGOUROPOULOS G ET AL: "A comparative study of Pt/gamma-Al2O3, Au/alpha-Fe2O3 and CuO-CeO2 catalysts for the selective oxidation of carbon monoxide in excess hydrogen", CATALYSIS TODAY, ELSEVIER, NL, vol. 75, no. 1-4, 3 July 2002 (2002-07-03) , pages 157-167, XP027361303, ISSN: 0920-5861 [retrieved on 2002-07-03]

## Description

### [Technical Field]

The present invention relates to an oxidation catalyst and a method for purification of exhaust gas using the oxidation catalyst.

### [Background Art]

Diesel engines are excellent in energy efficiency (mileage) and generate less CO₂, and hence are one of the internal combustion engines expected to gain popularity in the future not only in the Europe, but also around the world. Today, in order to oxidize, for purification, components contained in gas emitted from such internal combustion engines and the like, and other components, various oxidation catalysts are being studied. Here, as the oxidation catalysts, for example, oxidation catalysts which use a noble metal such as Pt or Pd as an active species, and which are capable of oxidizing carbon monoxide (CO) and hydrocarbons (HCs) are known.

However, the oxidation catalysts using a noble metal have such a problem (sulfur poisoning) that, when the oxidation catalysts are exposed to a sulfur component-containing gas (SOx), SOx adsorbs onto the active species, and the sulfur component accumulates thereon, so that the activities of the catalyst remarkably deteriorate. For this reason, the oxidation catalysts using a noble metal are required to have improved resistance to sulfur poisoning, and a solution to this is strongly demanded particularly in the Asia region, where fuels containing large amounts of sulfur components are distributed as fuels for internal combustion engines. In addition, such an oxidation catalyst using a noble metal exhibits a high level of catalytic activity, when particles of the noble metal are fine and are highly dispersed, because active sites are increased. However, the oxidation catalysts using a noble metal also have such a problem that, when the oxidation catalysts are exposed to a high temperature of about 800°C, particles of the noble metal easily aggregate and undergo grain growth (sintering), so that the activity deteriorates. Moreover, in recent years, it has been required, in the field of catalysts using noble metals, that the amount of the noble metal such as Pt or Pd used should be reduced in view of risk management and prices of rare metals.

Under such circumstances, catalysts have been proposed which use as a catalytic component an inexpensive material such as a base metal in combination with a noble metal, from the viewpoint of reducing the amount of the noble metal used, recently. For example, Japanese Unexamined Patent Application Publication No. 2008-221217 (PTL 1) discloses a catalyst comprising: a substrate formed of a compound containing alumina and ceria; noble metal particles formed of at least one noble metal element selected from platinum, palladium, and rhodium and supported on a surface of the substrate; and a metal oxide layer provided on surfaces of the noble metal particles, or part of surfaces of the noble metal particle, wherein the metal oxide layer is formed of an oxide of at least one metal selected from Co, Ni, Fe, Cu, Sn, Mn, Ce, and Zr. Meanwhile, Japanese Unexamined Patent Application Publication No. 2006-043634 (PTL 2) discloses a catalyst comprising: a noble metal; a transition metal compound part or all of which forms a composite material with the noble metal; a third constituent element being in contact with the composite material and having an electronegativity of 1.5 or lower; and a porous support which supports the noble metal, the transition metal compound, and the third constituent element, and part or all of which forms a composite oxide with the third constituent element. Moreover, Japanese Unexamined Patent Application Publication No. 2008-272614 (PTL 3) discloses a catalyst comprising a mixture of a combination of at least one copper-based catalyst and a noble metal-based catalyst, wherein the copper-based catalyst comprises: a support comprising at least one oxide selected from aluminum oxide, cerium oxide, zirconium oxide, zinc oxide, lead oxide, manganese oxide, nickel oxide, titanium oxide, iron oxide, vanadium oxide, cobalt oxide, chromium oxide, and metal silicates; and an active component comprising copper metal or copper oxide supported on the support. However, each of the catalysts as described in PTLs 1 to 3 is not necessarily sufficient from the viewpoint that both high-temperature durability and resistance to sulfur poisoning are sufficiently exhibited, and each of the catalysts as described in PTLs 1 to 3 is not necessarily sufficient from the viewpoint that oxidation activities for carbon monoxide (CO) and hydrocarbons are sufficiently maintained even in the cases of exposure to a high temperature of about 800°C, and of exposure to a sulfur component-containing gas (SOx).

### [Citation List]

### [Patent Literature]

[PTL 1] Japanese Unexamined Patent Application Publication No. 2008-221217
[PTL 2] Japanese Unexamined Patent Application Publication No. 2006-043634
[PTL 3] Japanese Unexamined Patent Application Publication No. 2008-272614

### [Summary of Invention]

### [Technical Problem]

The present invention has been made in view of the above-described problems of the conventional technologies, and an object of the present invention is to provide the following oxidation catalyst, and a method for purification of exhaust gas using the oxidation catalyst. Specifically, the oxidation catalyst has a sufficiently high level of high-temperature durability which makes it possible to sufficiently suppress deterioration in catalytic performance due to high temperature, and has an excellent resistance to sulfur poisoning which makes it possible to sufficiently suppress deterioration in catalytic performance due to sulfur poisoning. Further, the oxidation catalyst is capable of having a sufficiently high level of oxidation activity in each of the cases of exposure to a high temperature of about 800°C, and of exposure to a sulfur component-containing gas (SOx).

US 2007/204870 discloses a catalyst comprising noble metal nanoparticles on non-noble metal oxides incorporated in a support.

US 2011/143921 discloses an engine exhaust catalyst comprising a first washcoat layer having a platinum-based catalyst; a second washcoat layer; a third washcoat layer having a palladium-gold catalyst; and a copper ceria catalyst in at least one of the first, second and third layers.

EP-A1-0,092,023 discloses catalysts comprising in combination (a) metallic copper or a copper compound, (b) metallic molybdenum, metallic vanadium, a molybdenum compound or a vanadium compound, and (c) an alkali metal compound.

EP-A1-1,787,720 a catalyst composition wherein (a) the catalyst composition contains a copper oxide, zeolite, and one or more members selected from the group consisting of Pt, Pd, Ru, Rh, Ir and an alloy thereof, (b) a weight of the copper oxide relative to a sum of a weight of the copper oxide and a weight of the zeolite is in a range of 0.1 wt.% to 40 wt.%, (c) a sum of weights of the one or more members selected from the group consisting of Pt, Pd, Ru, Rh, Ir and an alloy thereof relative to the sum of the weight of the copper oxide and the weight of the zeolite is in a range of 1 ppm to 500 ppm, and (d) the catalyst composition is used to purify the exhaust gas.
AVGOUROPOULOS G ET AL: "A comparative study of Pt/gamma-AL2O3, Au/alpha-Fe203 and CuO-CeO2 catalysts for the selective oxidation of carbon monoxide in excess hydrogen", CATALYSIS TODAY, ELSEVIER, NL, vol. 75, no. 1-4, 3 July 2002 (2002-07-03), pages 157-167, XP027361303, discloses three different catalysts, namely Pt/γ-AL₂O₃, Au/α-Fe₂o₃ and CuO-CeO₂.

### [Solution to Problem]

The present inventors have conducted earnest study to achieve the above-described object. As a result, the present inventors have found the following fact. Specifically, when an oxidation catalyst for removing, by oxidation, at least one of carbon monoxide and hydrocarbons contained in exhaust gas comprises a mixture of: a catalyst (A) comprising a first oxide support containing 25% by mass or more of titania, and copper oxide supported on the first oxide support; and a catalyst (B) comprising a second oxide support containing 80% by mass or more of one or more oxides selected from alumina, ceria, and zirconia, and a noble metal supported on the second oxide support, the oxidation catalyst has a sufficiently high level of high-temperature durability which makes it possible to sufficiently suppress deterioration in catalytic performance due to high temperature, and has an excellent resistance to sulfur poisoning which makes it possible to sufficiently suppress deterioration in catalytic performance due to sulfur poisoning, and the oxidation catalyst is capable of having a sufficiently high level of oxidation activity in each of the cases of exposure to a high temperature of about 800°C, or of exposure to a sulfur component-containing gas (SOx). This finding has led to the completion of the present invention.

Specifically, the oxidation catalyst of the present invention is an oxidation catalyst for removing, by oxidation, at least one of carbon monoxide and hydrocarbons contained in exhaust gas, comprising a mixture of:
a catalyst (A) comprising a first oxide support containing 25% by mass or more of titania, and copper oxide supported on the first oxide support; and
a catalyst (B) comprising a second oxide support containing 80% by mass or more of one or more oxides selected from alumina, ceria, and zirconia, and a noble metal supported on the second oxide support wherein
the first oxide support comprises at least one of titania, composite metal oxides having a titania content of 50% by mass or more, and titania-supporting materials in which titania is supported on a metal oxide at a ratio of 25% by mass or more wherein
a mixing ratio of the catalyst (A) and the catalyst (B) in the mixture is 1:9 to 9:1 in terms of a mass ratio ((A):(B));
the copper oxide is supported on the first oxide support at a ratio of 1 to 30% by mass in the catalyst (A);
the noble metal is supported on the second oxide support at a ratio of 0.01 to 10% by mass in the catalyst (B).

In addition, the composite metal oxide is preferably a composite metal oxide containing titania and at least one of zirconia, ceria, tin oxide, and niobium oxide, and is particularly preferably a composite metal oxide containing titania and zirconia. Moreover, the titania-supporting material is such that the metal oxide in the titania-supporting material is preferably at least one of alumina, silica, ceria, and zirconia, and particularly preferably alumina.

In addition, a method for purification of exhaust gas of the present invention is a method comprising bringing exhaust gas from an internal combustion engine into contact with the above-described oxidation catalyst of the present invention, to thereby remove, by oxidation, at least one of carbon monoxide and hydrocarbons contained in the exhaust gas.

Note that, although it is not exactly clear why the oxidation catalyst of the present invention has a sufficiently high level of high-temperature durability which makes it possible to sufficiently suppress deterioration in catalytic performance due to high temperature, and has an excellent resistance to sulfur poisoning which makes it possible to sufficiently suppress deterioration in catalytic performance due to sulfur poisoning, and the oxidation catalyst is capable of having a sufficiently high level of oxidation activity in each of the cases of exposure to a high temperature of about 800°C, and of exposure to a sulfur component-containing gas (SOx), the present inventors speculates as follows. Specifically, first, in the catalyst (A) whose active species is copper oxide (CuO), the copper oxide is supported on the first oxide support containing titania (TiO₂) at a ratio of 25% by mass or more. Hence, the copper oxide is easily reduced by interacting with TiO₂ in the support (particularly when CuO is supported directly on TiO₂, CuO tends to be reduced more efficiently) . When CuO is reduced as described above, CuO is converted to Cu₂O whose Cu is monovalent or Cu (metal), and thus oxygen can be liberated. Then, the liberated oxygen is used to oxidize carbon monoxide or hydrocarbons.

On the other hand, in the catalyst (B) whose active species is a noble metal, oxygen is dissociatively adsorbed on the noble metal, and the adsorbed oxygen reacts with carbon monoxide and hydrocarbons, so that oxidation reaction proceeds. Here, when a conventional catalyst whose active species is a noble metal is exposed to exhaust gas in which carbon monoxide (CO) and hydrocarbons are coexistent, carbon monoxide and hydrocarbons are easily adsorbed onto the surface of the noble metal, and hence the catalytic activity deteriorates. However, in the present invention, the oxidation catalyst comprises a mixture of the catalyst (A) and the catalyst (B), and copper oxide contained in the catalyst (A) is present near the noble metal. The copper oxide is easily reduced by titania in the first oxide support, as mentioned above, and oxygen is generated by this reduction. In addition, the oxygen is easily supplied to the noble metal present near the copper oxide. For this reason, the oxidation catalyst of the present invention comprising the mixture of the catalyst (A) and the catalyst (B) is capable of easily removing carbon monoxide and hydrocarbons adsorbed on the noble metal and thus poisoning the noble metal, by oxidation using oxygen supplied from the copper oxide. The present inventors speculate that, for this reason, active sites of the noble metal in the catalyst can be sufficiently maintained even with a reduced amount of the noble metal supported, and a high level of catalytic activity can be maintained, in comparison with conventional catalysts.

In addition, the present inventors speculate that, when a catalyst in which titania is used as a support and a noble metal is supported as an active species thereof is exposed to a high temperature, the specific surface area of the catalytic component supported on the support tends to easily decrease, and thus active sites tend to easily decrease. From this viewpoint, the noble metal is supported on the second oxide support containing 80% by mass or more of one or more oxides selected from alumina, ceria, and zirconia, and copper oxide is supported on the first oxide support containing titania (TiO₂) at a ratio of 25% by mass or more, in the present invention. The present inventors speculate that, by using the different kinds of supports for supporting the noble metal and copper oxide, respectively, as described above, the decrease in specific surface area of the noble metal, which is the main active species for carbon monoxide and hydrocarbons, is sufficiently suppressed, and a sufficiently high level of high-temperature durability can be achieved.

In addition, in general, when a catalyst is exposed to a sulfur component-containing gas (SOx), SOx adsorbs onto the noble metal and the copper oxide, which are active species, and the sulfur component accumulates thereon, so that the activities of the catalyst deteriorate (sulfur poisoning) . However, in the present invention, TiO₂ having acid sites is sufficiently contained in the first oxide support, and hence the copper oxide on the first oxide support has a sufficiently lowered capability of adsorbing an acidic substance. For this reason, adsorption of SOx on the copper oxide is sufficiently suppressed, and the function of the copper oxide for supplying oxygen to the noble metal as described above is sufficiently maintained. The present inventors speculate that, for this reason, the catalyst of the present invention has a sufficiently high level of resistance to sulfur poisoning, and is capable of exhibiting a sufficiently high level of oxidation activity, even when exposed to a sulfur component-containing gas (SOx).

### [Advantageous Effects of Invention]

The present invention makes it possible to provide the following oxidation catalyst, and a method for purification of exhaust gas using the oxidation catalyst. Specifically, the oxidation catalyst has a sufficiently high level of high-temperature durability which makes it possible to sufficiently suppress deterioration in catalytic performance due to high temperature, and has an excellent resistance to sulfur poisoning which makes it possible to sufficiently suppress deterioration in catalytic performance due to sulfur poisoning. Further, the oxidation catalyst is capable of having a sufficiently high level of oxidation activity in each of the cases of exposure to a high temperature of about 800°C, and of exposure to a sulfur component-containing gas (SOx).

### [Brief Description of Drawings]

[Fig. 1] Fig. 1 is a graph showing 50% conversion temperatures of CO and C₃H₆ of oxidation catalysts obtained in Examples 1 to 3 and Comparative Examples 1 to 8 and subjected to a heat-resistance test.
[Fig. 2] Fig. 2 is a graph showing 50% conversion temperatures of CO and C₃H₆ of oxidation catalysts obtained in Examples 1 and 3 and Comparative Examples 1, 2, 4, 6, and 7 and subjected to a sulfur poisoning recovery test A.
[Fig. 3] Fig. 3 is a graph showing 50% conversion temperatures of CO and C₃H₆ of oxidation catalysts obtained in Examples 1 and 3 and Comparative Examples 1 and 3 and subjected to a sulfur poisoning recovery test B.

### [Description of Embodiments]

Hereinafter, the present invention will be described in detail based on preferred embodiments thereof.

First, an oxidation catalyst of the present invention is described. Specifically, the oxidation catalyst of the present invention is an oxidation catalyst for removing, by oxidation, at least one of carbon monoxide and hydrocarbons contained in exhaust gas, comprising a mixture of :
a catalyst (A) comprising a first oxide support containing 25% by mass or more of titania, and copper oxide supported on the first oxide support; and
a catalyst (B) comprising a second oxide support containing 80% by mass or more of one or more oxides selected from alumina, ceria, and zirconia, and a noble metal supported on the second oxide support, wherein
the first oxide support comprises at least one of titania, composite metal oxides having a titania content of 50% by mass or more, and titania-supporting materials in which titania is supported on a metal oxide at a ratio of 25% by mass or more
wherein a mixing ratio of the catalyst (A) and the catalyst (B) in the mixture is 1:9 to 9:1 in terms of a mass ratio ((A):(B));
the copper oxide is supported on the first oxide support at a ratio of 1 to 30% by mass in the catalyst (A);
the noble metal is supported on the second oxide support at a ratio of 0.01 to 10% by mass in the catalyst (B).

Here, the catalyst (A) used for the oxidation catalyst of the present invention is first described. As described above, the catalyst (A) comprises a first oxide support containing 25% by mass or more of titania and copper oxide supported on the first oxide support.

The first oxide support contains the titania in an amount of 25% by mass or more relative to the total amount of the first oxide support. If the titania content is less than the lower limit, characteristics originated from titania cannot be obtained sufficiently in the support. Hence, when copper oxide is supported on the support, it becomes difficult to sufficiently reduce the copper oxide by interaction with titania, so that sufficient heat resistance and sufficient resistance to sulfur poisoning cannot be obtained. In addition, although a preferred range of the titania content varies depending on the form of the support (for example, a case where the support is in a form containing titania as a supported substance, a case where the support is in a form containing titania in the form of a composite oxide with a further oxide, or the like), the titania content is more preferably 30% by mass or more, further preferably 40% by mass or more, and particularly preferably 50% by mass or more, relative to the total amount of the first oxide support.

In addition, the first oxide support is preferably titania (having a titania content of 100% by mass), a composite metal oxide having a titania content of 50% by mass or more, or a titania-supporting material in which titania is supported on a metal oxide at a ratio of 25% by mass or more. In addition, as the first oxide support, one of supports having such forms may be used alone, or two or more thereof may be used in combination. Note that the titania (having a titania content of 100% by mass) used for the first oxide support is not particularly limited, and commercially available one may be used as appropriate.

In addition, the composite metal oxide used for the first oxide support has a titania content of 50% by mass or more but less than 100% by mass. If the titania content in the composite metal oxide is less than the lower limit, not only copper oxide supported on the support cannot be sufficiently reduced, but also the resistance to sulfur poisoning tends to be lowered because of decrease of acid sites in the support. In addition, the titania content in the composite metal oxide is 50% by mass or more, preferably 70% by mass or more, more preferably 80% by mass or more, and particularly preferably 90% by mass or more.

In addition, the further oxide other than titania which can be contained in the composite metal oxide is not particularly limited, as long as the oxide can be used for an oxidation catalyst. However, the further oxide is preferably zirconia, ceria, tin oxide, or niobium oxide, more preferably zirconia or tin oxide, and further preferably zirconia. Note that the "composite metal oxide" herein is a concept encompassing those in a state where multiple metal oxides are at least partially dissolved in each other to form a solid solution, and mixtures in which multiple metal oxides are mixed with each other. The composite metal oxide is preferably in a state where multiple metal oxides at least partially form a solid solution, and more preferably a composite material obtained by obtaining coprecipitates and then calcining the coprecipitates, as will be described later.

A method for producing the composite metal oxide is not particularly limited, and, for example, the following method can be employed. Specifically, first, an aqueous solution or a water-containing solution is prepared in which a titanium salt and a metal salt for forming the further oxide are dissolved. Note that, in the preparation of the aqueous solution or the water-containing solution, a pH adjusting agent (for example, hydrogen peroxide or the like) or a surfactant may be optionally added. Subsequently, with sufficient stirring for making the aqueous solution or the solution more uniform, an alkaline solution is added into the aqueous solution or the solution to thereby deposit a precursor of titania and a precursor of an oxide (further oxide) of the above-described metal as precipitates. After that, the obtained precipitates (precipitates of the precursors) are calcined. Thus, a composite oxide is obtained. In the method for producing the composite metal oxide, the precursor of titania and the precursor of the oxide of the metal are simultaneously deposited as precipitates (precipitates of the precursors), and then the coprecipitates are calcined. Hence, it is also possible to form a solid solution between at least part of the titania and at least part of the oxide of the metal.

As each of the salt of titanium and the metal salt for forming the further oxide used in this method, it is possible to use, for example, a phosphoric acid salt, a sulfuric acid salt, a nitric acid salt, an acetic acid salt, a chloride, an organic acid salt (an acrylic acid salt or the like), an alkoxide having 1 to 4 carbon atoms (for example, a methoxide, an ethoxide, a propoxide, or a butoxide), or the like. Meanwhile, examples of the solvent in which these salts are dissolved include water and alcohols. Note that the amounts of the titanium salt and the metal salt used may be changed as appropriate depending on the intended design of the content ratio of titania and the further oxide in the support to be obtained. Note that when titania alone is used, commercially available titania particles may be used.

In addition, as the aqueous solution or water-containing solution in which the titanium salt and the metal salt for forming the further oxide are dissolved, a solution obtained by dissolving these salts in a solvent constituted of water or a solvent constituted of water and an alcohol or the like is preferably used. In addition, a method for preparing the aqueous solution or the solution is not particularly limited, and a known method can be used as appropriate. In addition, a pH adjusting agent, a surfactant (for example, a nonionic surfactant), and the like may be added to the aqueous solution, if necessary.

In addition, the precipitates of the precursor of titania and the precursor of the further oxide are deposited by adding an alkaline solution to the aqueous solution or the water-containing solution, to thereby adjust the pH of the aqueous solution or the water-containing solution.

Examples of the alkaline solution include aqueous solutions or alcohol solutions in which ammonia water, ammonium carbonate, sodium hydroxide, potassium hydroxide, sodium carbonate, or the like is dissolved. Of these alkaline solutions, an aqueous solution or an alcohol solution of ammonia water or ammonium carbonate is more preferable, because these can be easily removed by vaporization during the calcination of the composite oxide. In addition, from the viewpoint of promoting the deposition reaction of the precipitates of the precursors, the pH of the alkaline solution is preferably adjusted to 9 or higher.

In addition, the pH of the aqueous solution or the solution is preferably adjusted by adding in advance a pH adjusting agent (hydrogen peroxide water or the like) or the like to the aqueous solution or the solution before the addition of the alkaline solution, to achieve a pH at which the precursors start to deposit. The precipitates can be deposited more efficiently by adding in advance the pH adjusting agent before the addition of the alkaline solution, as described above. For example, when the metal is zirconium, complex ions of titanium ions and zirconium ions are formed by adding the pH adjusting agent, so that the pHs at which the titanium ions and zirconium ions deposit become close to each other. Hence, the mixing of the coprecipitates tends to occur at the atomic level.

In addition, when the precipitates are deposited in the method for producing the support, it is preferable to add the alkaline solution with sufficient stirring of the aqueous solution or the solution, so that the precipitates of the precursors can be deposited in a more uniformly dispersed state. A method for the stirring is not particularly limited, and a known method can be used as appropriate. For example, a method in which the stirring is performed by using propeller stirring and a homogenizer in combination to make the aqueous solution or the solution more uniform, or the like may be used as appropriate.

Moreover, in the method for producing the support, the precipitates are calcined after the precipitates of the precursors are obtained. The calcination may be performed in the air. In addition, in the calcination step, it is preferable to perform the calcination under a temperature condition of 300 to 800°C (more preferably 400 to 500 °C) for 3 to 20 hours. If the calcination temperature or the calcination time is less than the lower limit, the stability of the support against heat tends to be lowered. Meanwhile, if the calcination temperature or the calcination time exceeds the upper limit, the specific surface area of the obtained composite metal oxide tends to decrease. In addition, a step of drying the precipitates of the precursors may be performed before the calcination step. In such a case, drying conditions of 30 to 150°C and 1 to 24 hours are preferably employed.

In addition, in the titania-supporting material which can be used as the first oxide support, the titania is supported on a metal oxide at a ratio of 25% by mass or more. If copper oxide is supported on a support (titania-supporting material) with the amount of titania supported being less than the lower limit, the amount of titania in contact with copper oxide is insufficient. As a result, not only it tends to be difficult to sufficiently improve the oxidation activity of the catalyst as a whole by sufficiently reducing the copper oxide during use, but also it tends to be difficult to sufficiently suppress the sulfur poisoning. In addition, from the similar viewpoints as the above-described reasons, the amount of titania supported in the titania-supporting material is preferably 25% by mass or more, more preferably 30% by mass or more, and particularly preferably 40 to 90% by mass.

In addition, from the viewpoint that a high specific surface area is maintained even at high temperatures, the metal oxide used for supporting titania in the titania-supporting material is preferably alumina, silica, ceria, or zirconia, more preferably alumina or zirconia, and particularly preferably alumina. Note that a method for producing the metal oxide is not particularly limited, and a known method can be used as appropriate. In addition, as the metal oxide, a commercially available metal oxide may be used as appropriate.

In addition, a method for producing the titania-supporting material is not particularly limited, as long as a given amount of titania can be supported on the metal oxide. For example, it is possible to employ a method in which a solution containing a titanium salt at a given concentration is brought into contact with the metal oxide and supported thereon, followed by calcination. When such a method is employed, the titania-supporting material having a given supported amount can be produced by changing, as appropriate, the amount and concentration of the solution used, or by repeating, as appropriate, the supporting step, so that the amount of titania supported can take a value falling within the above-described given range. In addition, the titanium salt used for the supporting on the metal oxide is not particularly limited, and, for example, a phosphoric acid salt, a sulfuric acid salt, a nitric acid salt, an acetic acid salt, a chloride, an organic acid salt (an acrylic acid salt or the like), an alkoxide having 1 to 4 carbon atoms (for example, a methoxide, an ethoxide, a propoxide, or a butoxide), or the like can be used as appropriate. In addition, it is preferable to perform a drying step for removing the solvent, after the solution is supported on the metal oxide. In this case, drying conditions of 30 to 150°C and 1 to 24 hours are preferably employed. In addition, in the calcination step of the production of the titania-supporting material, the calcination is preferably performed under a temperature condition of 500 to 900°C (more preferably 550 to 800°C) for 1 to 20 hours. If the calcination temperature or the calcination time is less than the lower limit, removal of carbon in the raw material tends to be insufficient. Meanwhile, if the calcination temperature or the calcination time exceeds the upper limit, the specific surface area tends to decrease.

Moreover, when the first oxide support is in the form of powder, the average particle diameter of particles (secondary particles in a case where the composite metal oxide is aggregates of primary particles) of the powder is preferably 0.01 to 100 µm, and more preferably 0.1 to 10 µm. If the average particle diameter is less than the lower limit, sintering of the support tends to easily occur under a high-temperature condition. Meanwhile, if the average particle diameter exceeds the upper limit, the activity of the oxidation catalyst tends to deteriorate, because it becomes difficult to diffuse CO and hydrocarbons.

In addition, a specific surface area of the first oxide support is preferably 15 m²/g or more, and preferably 30 to 300 m²/g. If the specific surface area is less than the lower limit, it tends to be difficult to support the copper oxide with a sufficient degree of dispersion. Meanwhile, if the specific surface area exceeds the upper limit, the amount of decrease in specific surface area due to thermal degradation of the support tends to increase. The specific surface area can be measured by the so-called single-point BET method.

In addition, in the catalyst (A) according to the present invention, copper oxide is supported on the above-described first oxide support. Thus, the catalyst (A) comprises copper oxide as a catalytic component. The amount of copper oxide supported is 1 to 30% by mass, and preferably 3 to 10% by mass, in the catalyst (A). If the amount of copper oxide supported is less than the lower limit, it tends to be impossible to impart a sufficient activity to the obtained oxidation catalyst. Meanwhile, if the amount of copper oxide supported exceeds the upper limit, it tends to be difficult to effectively use the copper oxide, because of the formation of coarse CuO particles not supported on the first oxide support.

As a method for supporting copper oxide, for example, a method can be employed in which a solution containing a given amount of a copper (Cu) compound is supported on the first oxide support by bringing the solution containing the copper compound at a given concentration into contact with the support, followed by calcination. As the copper compound used for supporting the copper oxide, a phosphoric acid salt, a sulfuric acid salt, a nitric acid salt, an acetic acid salt, a chloride, an organic acid salt (an acrylic acid salt or the like), an alkoxide having 1 to 4 carbon atoms (for example, a methoxide, an ethoxide, a propoxide, or a butoxide), or the like of copper can be used as appropriate.

In addition, the calcination step in the method for supporting copper oxide may be performed in the air. In addition, the calcination temperature in the calcination step is preferably 200 to 700 °C. If the calcination temperature is lower than the lower limit, it tends to be impossible to obtain an oxidation catalyst having a sufficient oxidation activity, because resultant insufficient thermal decomposition of the copper compound makes it difficult to support copper oxide on the support. Meanwhile, if the calcination temperature exceeds the upper limit, the oxidation activity tends to deteriorate, because the specific surface area of the first oxide support easily decreases. In addition, the calcination time is preferably 0.1 to 100 hours. If the calcination time is less than the lower limit, the oxidation activity of the obtained oxidation catalyst tends to deteriorate, because resultant insufficient thermal decomposition of the copper compound makes it difficult to support copper oxide. Meanwhile, even when the calcination time exceeds the upper limit, a further effect cannot be obtained, and this tends to lead to increase in costs for preparing the catalyst.

Note that other known components usable in the field of oxidation catalysts can be used, as appropriate, in the catalyst (A), unless effects of the catalyst (A) are impaired.

Next, the catalyst (B) used for the oxidation catalyst of the present invention is described. The catalyst (B) comprises a second oxide support containing 80% by mass or more of one or more oxides selected from alumina, ceria, and zirconia, and a noble metal supported on the second oxide support.

The second oxide support contains 80% by mass or more of one or more oxides selected from alumina, ceria, and zirconia. If the content of the oxide is less than the lower limit, the oxidation activity of the oxidation catalyst deteriorates, because it becomes difficult to support the noble metal with a high degree of dispersion. In addition, because of the same reason, the content of the oxide is more preferably 85% by mass or more, more preferably 90% by mass or more, and particularly preferably 95% by mass or more but 100% by mass or less.

In addition, the alumina, ceria, and zirconia may be contained in the form of a composite material thereof in the second oxide support. Besides alumina, ceria, and zirconia, for example, ceria-zirconia (a composite oxide), alumina-ceria-zirconia (a composite oxide), or the like may be contained in the second oxide support. In addition, as the second oxide support, one of these oxides may be used alone, or two or more thereof may be used in combination. Moreover, examples of further oxides which can be contained in the second oxide support include oxides of lanthanum, barium, strontium, calcium, and magnesium.

In addition, from the viewpoints that the noble metal is supported with a high degree of dispersion, and is resistant to aggregation, the second oxide support preferably contains any one or more of alumina, ceria, zirconia, ceria-zirconia (a composite oxide), and alumina-ceria-zirconia (a composite oxide), more preferably contains any one or more of alumina and ceria-zirconia, and particularly preferably contains alumina. Note that a method for preparing the second oxide support is not particularly limited, and a known method can be used as appropriate. In addition, as the second oxide support, a commercially available oxide support may be used as appropriate.

Furthermore, when the second oxide support is in the form of powder, an average particle diameter of particles (secondary particles in a case where the support contains a composite oxide, and the composite oxide is aggregates of primary particles) of the powder is preferably 0.01 to 100 µm, and more preferably 0.1 to 10 µm. If the average particle diameter is less than the lower limit, sintering of the support tends to easily occur under a high-temperature condition. Meanwhile, if the average particle diameter exceeds the upper limit, the activity of the oxidation catalyst tends to deteriorate, because it becomes difficult to diffuse CO and hydrocarbons.

In addition, a specific surface area of the second oxide support is preferably 15 m²/g or more, and preferably 30 to 300 m²/g. If the specific surface area is less than the lower limit, it tends to be difficult to support the noble metal with a sufficient degree of dispersion, so that it tends to be difficult to obtain a sufficient oxidation activity. Meanwhile, if the specific surface area exceeds the upper limit, the amount of decrease in specific surface area due to thermal degradation of the support tends to increase.

In addition, a noble metal is supported on the second oxide support in the catalyst (B) according to the present invention. Examples of the noble metal include platinum, rhodium, palladium, osmium, iridium, and gold. Of these noble metals, it is more preferable to use platinum, rhodium, or palladium, and further preferable to use platinum, because a higher level of catalytic activity can be obtained.

In addition, the amount of the noble metal supported is 0.01 to 10% by mass, and preferably 0.1 to 5% by mass, in the catalyst (B). If the amount of the noble metal supported is less than the lower limit, it tends to be difficult to obtain sufficient oxidation activities for carbon monoxide and hydrocarbons in exhaust gas. Meanwhile, if the amount of the noble metal supported exceeds the upper limit, the economic efficiency tends to be lowered because of the too large amount of the noble metal used, and the effect obtained by the use of the noble metal tends to be saturated.

A method for supporting the noble metal is not particularly limited, and, for example, a method can be preferably used in which a solution obtained by dissolving a salt (a nitric acid salt, a chloride, an acetic acid salt, or the like) of the noble metal or a complex of the noble metal in a solvent such as water or an alcohol is brought into contact with the second oxide support, to thereby support the solution on the support, followed by calcination. In the method for supporting the noble metal, it is preferable to perform a drying step for removing the solvent, after the solution is supported on the support. In this case, drying conditions of 30 to 150°C and 1 to 24 hours are preferably employed. In addition, calcination conditions in the method for supporting the noble metal are preferably an oxidizing atmosphere (for example, the air), 250 to 300°C, and about 30 to 60 minutes. Moreover, such a method for supporting the noble metal may be performed repeatedly, until a desired supported amount can be obtained.

Note that other known components usable in the field of oxidation catalysts may be used, as appropriate, in the catalyst (B), unless effects of the catalyst (B) are impaired.

Hereinabove, the catalyst (A) and the catalyst (B) are described. Next, the oxidation catalyst of the present invention comprising a mixture thereof will be described in further detail.

The oxidation catalyst of the present invention comprises a mixture of the catalyst (A) and the catalyst (B), as described above. The present invention makes it possible to obtain higher levels of high-temperature heat resistance and resistance to sulfur poisoning by using different supports in the catalyst (A) and the catalyst (B), respectively, and supporting different components (copper oxide and the noble metal) on these supports, respectively, thereby more efficiently utilizing the interaction between the copper oxide and the noble metal.

In the oxidation catalyst of the present invention, the mixing ratio of the catalyst (A) and the catalyst (B) in the mixture is 1:9 to 9:1, and preferably 1:4 to 4:1, in terms of a mass ratio ((A):(B)). If the mass ratio of the catalyst (A) is less than the lower limit, it tends to be difficult to obtain a sufficient catalytic activity and a sufficient resistance to sulfur poisoning, because oxygen originated from the copper oxide in the catalyst (A) cannot be used sufficiently. Meanwhile, if the mass ratio of the catalyst (A) exceeds the upper limit, it tends to be impossible to obtain a sufficient catalytic activity, because the amount of the noble metal originated from the catalyst (B) is relatively small.

In addition, a total content of the noble metal in the oxidation catalyst of the present invention is preferably 0.01 to 10% by mass, and more preferably 0.1 to 5% by mass, relative to the total amount of the catalyst. If the total amount of the noble metal is less than the lower limit, it tends to be difficult to obtain a sufficient oxidation activity. Meanwhile, if the total amount of the noble metal exceeds the upper limit, the economic efficiency tends to be lowered because of the large amount of the noble metal used, and the effect obtained by the noble metal tends to be saturated.

In addition, a total content of the copper oxide in the oxidation catalyst of the present invention is preferably 1 to 30% by mass, and more preferably 3 to 10% by mass, relative to the total amount of the catalyst. If the copper oxide content is less than the lower limit, it tends to be difficult to obtain a sufficient catalytic activity and a sufficient resistance to sulfur poisoning, because oxygen originated from the copper oxide cannot be used sufficiently. Meanwhile, if the copper oxide content exceeds the upper limit, the amount of copper oxide not sufficiently acting as an active species tends to increase, because of aggregation of the copper oxide.

In addition, the form of the oxidation catalyst of the present invention is not particularly limited, and can be used by being shaped into various forms, as appropriate, depending on the application thereof. For example, the oxidation catalyst may be used by being shaped into various forms such as a pellet shape, a monolithic shape, a honeycomb shape, a foam shape, and the like, or may be used in a form of being supported on a known substrate such as a cordierite honeycomb substrate. As a method for the shaping or a method for the supporting on the substrate, a known method can be used, as appropriate.

Furthermore, when the oxidation catalyst of the present invention is in a form of particles (also including a case where the oxidation catalyst is in the form of pellets), an average particle diameter of particles (secondary particles in a case of aggregates of primary particles) of the mixture is preferably 0.01 to 100 µm, and more preferably 0.1 to 10 µm. If the average particle diameter is less than the lower limit, sintering of the supports in the mixture tends to easily occur under a high-temperature condition. Meanwhile, if the average particle diameter exceeds the upper limit, the activity of the oxidation catalyst tends to deteriorate, because it becomes difficult to diffuse CO and hydrocarbons.

In addition, when the oxidation catalyst of the present invention is in the form of particles, a specific surface area thereof is preferably 15 m²/g or more, and preferably 30 to 300 m²/g. If the specific surface area is less than the lower limit, the activity tends to deteriorate, because the active species (Pt and Cu) readily aggregate. Meanwhile, if the specific surface area exceeds the upper limit, the activity tends to deteriorate, because the catalyst as a whole readily aggregate.

The oxidation catalyst of the present invention as described above is capable of sufficiently oxidizing, for purification, carbon monoxide and hydrocarbons even in exhaust gas under an oxygen-excess atmosphere where oxygen is present in excess relative to the reducing gas (an atmosphere in which the chemical equivalence ratio of oxygen to reducing gas components is 1 or higher) . Hence, the oxidation catalyst of the present invention is particularly useful, for example, as a catalyst for removing, by oxidation, carbon monoxide and hydrocarbons in exhaust gas from an internal combustion engine of an automobile (particularly preferably, a diesel engine or a lean burn engine having low fuel consumption rate).

Next, a method for purification of exhaust gas of the present invention using the above-described oxidation catalyst of the present invention is described. Specifically, the method for purification of exhaust gas of the present invention comprises bringing exhaust gas from an internal combustion engine into contact with the above-described oxidation catalyst of the present invention, to thereby remove, by oxidation, at least one of carbon monoxide and hydrocarbons contained in the exhaust gas.

A method for bringing the exhaust gas into contact is not particularly limited. For example, it is possible to employ a method in which the exhaust gas is brought into contact with the oxidation catalyst of the present invention by disposing the oxidation catalyst of the present invention in an exhaust gas pipe, and passing exhaust gas emitted from an internal combustion engine such as a gasoline vehicle engine, a diesel engine, a lean burn engine having low fuel consumption rate, or the like through the exhaust gas pipe, or other methods.

The method for purification of exhaust gas of the present invention can be used particularly preferably as a method for purification of at least one of carbon monoxide and hydrocarbons by bringing exhaust gas containing at least one of carbon monoxide and hydrocarbons into contact with an oxidation catalyst under an oxygen-excess atmosphere. The "oxygen-excess atmosphere" herein refers to an atmosphere where a chemical equivalence ratio of oxygen to reducing gas components is 1 or higher. As described above, the present invention makes it possible to efficiently purify exhaust gas even under an oxygen-excess atmosphere emitted from a diesel engine or a lean burn engine having low fuel consumption rate.

In addition, when exhaust gas is purified as described above, it is also possible to use the oxidation catalyst of the present invention alone or a combination of the oxidation catalyst of the present invention with other materials supported on a substrate or the like. The substrate is not particularly limited, and a known substrate usable for supporting a catalyst for purification of exhaust gas can be used as appropriate. When exhaust gas from an internal combustion engine is purified as described above, the oxidation catalyst of the present invention may be used in combination with a further catalyst, from the viewpoint of more efficiently purifying the exhaust gas. The further catalyst is not particularly limited, and a known catalyst (for example, a NOx reduction catalyst, a NOx storage reduction type catalyst (NSR catalyst), a NOx selective reduction catalyst (a SCR catalyst), or the like) can be used as appropriate.

### [Examples]

Hereinafter, the present invention will be descried more specifically based on Examples and Comparative Examples. However, the present invention is not limited to Examples below.

### (Example 1)

First, an aqueous solution in which 2.3 g of copper nitrate trihydrate was dissolved was impregnated into 10 g of a titania (TiO₂) powder (manufactured by Evonik Industries AG under the trade name of "P25" and having a specific surface area of 40 m²/g). The resultant powder was evaporated to dryness, and then dried at 110°C overnight (16 hours), followed by calcination at 500°C for 3 hours. Thus, copper oxide was supported on the titania to produce a catalyst (A-1). Note that the amount of copper oxide supported in the catalyst (A-1) was 7.0% by mass.

Next, an aqueous solution of diammine dinitro platinum complex (concentration of diammine dinitro platinum complex: 0.2 mol/L) was impregnated into 10 g of an alumina (Al₂O₃) powder (manufactured by Nikki-Universal Co., Ltd. under the trade name of "TN4" and having a specific surface area of 200 m²/g), with the amount of platinum supported being 1.0% by mass. The resultant powder was evaporated to dryness, and then dried at 110°C overnight (16 hours), followed by calcination at 500°C for 3 hours. Thus, a catalyst (B-1) in which platinum was supported on alumina was obtained. Note that the amount of platinum supported in the catalyst (B-1) was 1.0% by mass.

Subsequently, 10 g of a powder of the catalyst (A-1) and 10 g of a powder of the catalyst (B-1) were mixed with each other in a mortar. The mixture was subjected to powder compacting molding in a usual manner (CIP), and then ground into the form of pellets having diameters of 0.5 to 1.0 mm. Thus, an oxidation catalyst of the present invention was obtained (specific surface area: 120 m²/g). The final copper oxide content in the oxidation catalyst was 3.5% by mass, and the final platinum content therein was 0.5% by mass.

### (Example 2)

An oxidation catalyst was produced in the same manner as in Example 1, except that 10 g of a composite metal oxide of titania and zirconia (the mass ratio of TiO₂:ZrO₂ was 80:20) obtained by employing a preparation method shown below was used instead of 10 g of the titania (TiO₂) powder in the production process of the catalyst (A-1), and thus a catalyst (A-2) in which copper oxide was supported on the composite metal oxide of titania and zirconia was produced instead of the catalyst (A-1). In other words, the thus obtained oxidation catalyst was a mixture of 10 g of the catalyst (A-2) and 10 g of the catalyst (B-1) (in the form of pellets having diameters of 0.5 to 1.0 mm, specific surface area: 135 m²/g). In addition, the final copper oxide content in the oxidation catalyst was 3.5% by mass, and the final platinum content therein was 0.5% by mass.

### <Method for Preparing Composite Metal Oxide of Titania and Zirconia>

First, an aqueous solution was obtained by dissolving 174.4 g of an aqueous titanium tetrachloride solution containing titanium tetrachloride at a concentration of 27.5% by mass in terms of titania (TiO₂) and 66.7 g of an aqueous zirconium oxynitrate solution containing zirconium oxynitrate at a concentration of 18% by mass in terms of ZrO₂ into 500 g of ion-exchanged water. Then, 80 g of hydrogen peroxide water of a concentration of 30% by mass and 12 g of a nonionic surfactant (manufactured by Lion Corporation under the trade name of "LEOCON 1020H") were further added to the aqueous solution. Thus, an aqueous raw material solution was prepared. Subsequently, while the aqueous raw material solution was uniformly stirred by using a homogenizer (rotation speed: 11000min⁻¹) in combination with propeller stirring, an aqueous ammonia solution obtained by diluting 228 g of an aqueous ammonia solution of a concentration of 25% by mass with 500 g of ion-exchanged water was added to the aqueous raw material solution. Thus, precipitates were formed. Next, the thus obtained precipitates were collected, and dried at 150°C for 7 hours. Subsequently, the dried precipitates were subjected to a treatment in which the temperature was raised from 150°C to 4 00°C under a condition of a rate of temperature rise of 50°C/h, and the precipitates were calcined at 400°C for 5 hours. Then, a treatment was performed in which the temperature was further raised to 500°C under a condition of a rate of temperature rise of 50 °C/h, and the precipitates were calcined at 500°C for 5 hours. Thus, a composite metal oxide of titania and zirconia was obtained with the mass ratio (TiO₂:ZrO₂) of titania and zirconia being 80 : 20. Note that the specific surface area of the powder of the composite metal oxide of zirconia was 70 m²/g.

### (Example 3)

An oxidation catalyst was produced in the same manner as in Example 1, except that 10 g of a titania-supporting material which was obtained by employing a preparation method shown below and which supported titania in an amount of 30% by mass was used instead of 10 g of the titania (TiO₂) powder in the production process of the catalyst (A-1), and thus a catalyst (A-3) in which copper oxide was supported on the titania-supporting material was produced instead of the catalyst (A-1) . In other words, the thus obtained oxidation catalyst was a mixture of 10 g of the catalyst (A-3) and 10 g of the catalyst (B-1) (in the form of pellets having diameters of 0.5 to 1.0 mm, specific surface area: 150 m²/g). In addition, the final copper oxide content in the oxidation catalyst was 3.5% by mass, and the final platinum content therein was 0.5% by mass.

### <Method for Preparing Titania-Supporting Material>

First, a solution obtained by dissolving 380.4 g of citric acid in 365 g of ion-exchanged water was heated to 80°C, and then 179.7 g of titanium tetraisopropoxide was added to the solution, followed by stirring for 8 hours. Thus, a titanium tetraisopropoxide-containing solution was obtained. Next, the obtained titanium tetraisopropoxide-containing solution was supported by impregnation on 50 g of an alumina (Al₂O₃) powder (manufactured by Nikki-Universal Co. , Ltd. under the trade name of "TN4" and having a specific surface area of 200 m²/g). Then, the resultant powder was dried at 110°C overnight (16 hours), and calcined at 550°C for 5 hours. Thus, titania was supported on the alumina (titania-supporting step). Then, the titania-supporting step was performed repeatedly, until the amount of titania supported reached 30% by mass. Thus, the mass ratio (TiO₂:Al₂O₃) of titania and alumina was adjusted to 30:70. Then, calcination was performed at 800 °C for 5 hours. Thus, the titania-supporting material (a support in which titania was supported on alumina at a ratio of 30% by mass) was obtained. Note that the specific surface area of the powder of the titania-supporting material was 100 m²/g.

### (Comparative Example 1)

An aqueous solution of diammine dinitro platinum complex (concentration of diammine dinitro platinum complex: 0.2 mol/L) was impregnated into 10 g of an alumina (Al₂O₃) powder (manufactured by Nikki-Universal Co., Ltd. under the trade name of "TN4" and having a specific surface area of 200 m²/g), with the amount of platinum supported being 1.0% by mass. The resultant powder was evaporated to dryness, and then dried at 110°C overnight (16 hours), followed by calcination at 500°C for 3 hours. Thus, a catalyst (C-1) for comparison was obtained in which 1.0% by mass of platinum was supported on alumina. Then, the catalyst (C-1) was subjected to powder compacting molding in a usual manner (CIP), and then ground into the form of pellets having diameters of 0.5 to 1.0 mm. Thus, an oxidation catalyst for comparison made of the catalyst (C-1) was obtained (specific surface area: 200 m²/g). Note that the platinum content in the oxidation catalyst was 1.0% by mass.

### (Comparative Example 2)

A catalyst (C-2) for comparison in which 0.5% by mass of platinum was supported on alumina was obtained, and then an oxidation catalyst for comparison (in the form of pellets having diameters of 0.5 to 1.0 mm, specific surface area: 200 m²/g) made of the catalyst (C-2) was obtained in the same manner as in Comparative Example 1, except that the amount of platinum supported was changed from 1.0% by mass to 0.5% by mass. Note that the platinum content in the oxidation catalyst was 0.5% by mass.

### (Comparative Example 3)

An oxidation catalyst for comparison was produced in the same manner as in Example 1, except that 10 g of an alumina (Al₂O₃) powder (manufactured by Nikki-Universal Co., Ltd. under the trade name of "TN4" and having a specific surface area of 200 m²/g) was used instead of 10 g of the titania (TiO₂) powder in the production process of the catalyst (A-1), and thus a catalyst (C-3) for comparison in which copper oxide was supported on the alumina was produced instead of the catalyst (A-1). In other words, the thus obtained oxidation catalyst was a mixture of 10 g of the catalyst (C-3) and 10 g of the catalyst (B-1) (in the form of pellets having diameters of 0.5 to 1.0 mm, specific surface area: 200 m²/g). In addition, the final copper oxide content in the oxidation catalyst was 3.5% by mass, and the final platinum content therein was 0.5% by mass.

### (Comparative Example 4)

An oxidation catalyst for comparison was produced in the same manner as in Example 1, except that 10 g of a ceria (CeO₂) powder (produced by Anan Kasei Co., Ltd., and having a specific surface area of 60 m²/g) was used instead of 10 g of the titania (TiO₂) powder in the production process of the catalyst (A-1), and thus a catalyst (C-4) for comparison in which copper oxide was supported on the ceria was produced instead of the catalyst (A-1) . In other words, the thus obtained oxidation catalyst was a mixture of 10 g of the catalyst (C-4) and 10 g of the catalyst (B-1) (in the form of pellets having diameters of 0.5 to 1.0 mm, specific surface area: 130 m²/g). In addition, the final copper oxide content in the oxidation catalyst was 3.5% by mass, and the final platinum content therein was 0.5% by mass.

### (Comparative Example 5)

An oxidation catalyst for comparison was produced in the same manner as in Example 1, except that 10 g of a titania (TiO₂) powder (manufactured by Evonik Industries AG under the trade name of "P25" and having a specific surface area of 40 m²/g) was used instead of 10 g of the alumina (Al₂O₃) powder in the production process of the catalyst (B-1), and thus a catalyst (C-5) for comparison in which platinum was supported on the titania was produced instead of the catalyst (B-1) . In other words, the thus obtained oxidation catalyst was a mixture of 10 g of the catalyst (A-1) and 10 g of the catalyst (C-5) (in the form of pellets having diameters of 0.5 to 1.0 mm, specific surface area: 40 m²/g). In addition, the final copper oxide content in the oxidation catalyst was 3.5% by mass, and the final platinum content therein was 0.5% by mass.

### (Comparative Example 6)

An oxidation catalyst for comparison was produced in the same manner as in Example 1, except that 10 g of a catalyst (C-3) for comparison which was obtained by employing the same method as the method described in Comparative Example 3 and in which copper oxide was supported on alumina was used instead of 10 g of the catalyst (A-1), and 10 g of a catalyst (C-5) for comparison which was obtained by employing the same method as the method described in Comparative Example 5 and in which platinum was supported on the titania was used instead of 10 g of the catalyst (B-1). In other words, the thus obtained oxidation catalyst was a mixture of 10 g of the catalyst (C-3) and 10 g of the catalyst (C-5) (in the form of pellets having diameters of 0.5 to 1.0 mm, specific surface area: 120 m²/g). In addition, the final copper oxide content in the oxidation catalyst was 3.5% by mass, and the final platinum content therein was 0.5% by mass.

### (Comparative Example 7)

An aqueous solution in which 1.2 g of copper nitrate trihydrate was dissolved was impregnated into 10 g of an alumina (Al₂O₃) powder (manufactured by Nikki-Universal Co., Ltd. under the trade name of "TN4" and having a specific surface area of 200 m²/g), and then an aqueous solution of diammine dinitro platinum complex (concentration of diammine dinitro platinum complex: 0.2 mol/L) was impregnated thereinto. The resultant powder was evaporated to dryness, and then further dried at 110°C overnight (16 hours), followed by calcination at 500°C for 3 hours. Thus, 3.5% by mass of copper oxide and 0.5% by mass of platinum were supported on the alumina to obtain a catalyst (C-6) for comparison. Subsequently, the catalyst (C-6) for comparison was subjected to powder compacting molding in a usual manner (CIP), and then ground into the form of pellets having diameters of 0.5 to 1.0 mm. Thus, an oxidation catalyst for comparison (specific surface area: 200 m²/g) made of the catalyst (C-6) was obtained. Note that the copper oxide content in the oxidation catalyst was 3.5% by mass, and the platinum content therein was 0.5% by mass.

### (Comparative Example 8)

An aqueous solution in which 2.3 g of copper nitrate trihydrate was dissolved was impregnated into 10 g of a titania (TiO₂) powder (manufactured by Evonik Industries AG under the trade name of "P25" and having a specific surface area of 40 m²/g). The resultant powder was evaporated to dryness, and then dried at 110°C overnight (16 hours), followed by calcination at 500°C for 3 hours. Thus, an oxidation catalyst for comparison made of a catalyst (C-7) in which copper oxide was supported on the titania was obtained (in the form of pellets having diameters of 0.5 to 1.0 mm, specific surface area: 40 m²/g). Note that the copper oxide content in the oxidation catalyst was 7.0% by mass.

### [Evaluation of Characteristics of Oxidation Catalysts Obtained in Examples 1 to 3 and Comparative Examples 1 to 8]

### <Heat-Resistance Test>

A heat-resistance test was performed on the oxidation catalysts obtained in Examples 1 to 3 and Comparative Examples 1 to 8 as follows. Specifically, as the heat-resistance test, a method was employed in which a treatment was performed by placing 2.5 g of an oxidation catalyst (initial state) in a 15-ml porcelain crucible, and heating the oxidation catalyst under a temperature condition of 800°C for 5 hours, while air was supplied at 1000 ml/minute. Note that the "initial state" herein refers to a state where the catalyst was not subjected any one of the heat-resistance test and sulfur poisoning recovery tests described later, after the production of the catalyst.

### <Measurement of Oxidation Activities of Oxidation Catalysts Subjected to Heat-Resistance Test>

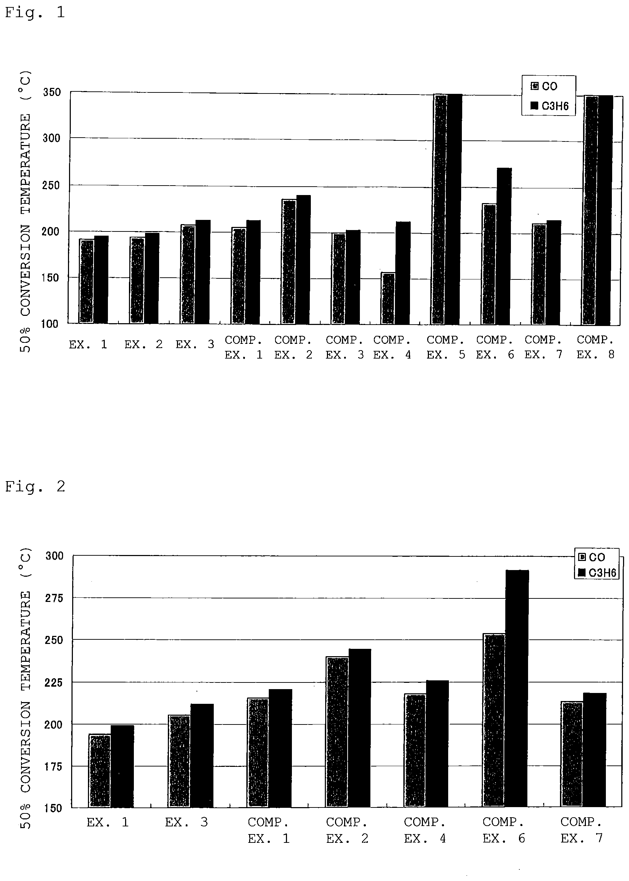

By using each of the oxidation catalysts obtained in Examples 1 to 3 and Comparative Examples 1 to 8 and subjected to the above-described heat-resistance test, the oxidation activities thereof were measured as follows. Specifically, in this test for measuring the oxidation activities, first, a treatment (pretreatment) was performed by using a fixed bed flow type reactor. In this pretreatment, 1.0 g of the oxidation catalyst subjected to the heat-resistance test was packed into a silica glass reaction tube having an inner diameter of 15 mm, and the oxidation catalyst was heated at 500°C for 10 minutes, and then cooled to 70°C, while a model gas containing CO (1000 ppm), C₃H₆ (500 ppmC: volume ratio in term of carbon), NO (100 ppm), O₂ (10% by volume), CO₂ (10% by volume), H₂O (10% by volume), and N₂ (the balance) was supplied to the oxidation catalyst under a condition of 7000 ml/minute. Subsequently, while the model gas was supplied to the oxidation catalyst subjected to the pretreatment at 7000 ml/minute, the temperature of gas entering the catalyst was raised from 70°C to 520°C at a rate of temperature rise of 10°C/minute. Then, the CO concentration and the C₃H₆ concentration in gas exiting from the catalyst (gas brought into contact with the catalyst and then emitted from the silica glass reaction tube) were measured by using a continuous gas analyzer during the temperature rise, and the CO conversion and the C₃H₆ conversion were calculated from the CO concentration and the C₃H₆ concentration in the model gas (entering gas) and the CO concentration and the C₃H₆ concentration in the exiting gas. Then, temperatures at which the CO conversion and the C₃H₆ conversion reached 50% were found as the 50% conversion temperatures of CO and C₃H₆, respectively. Fig. 1 shows the obtained results.

### <Sulfur Poisoning Recovery Test A>

A sulfur poisoning recovery test A was performed on the oxidation catalysts obtained in Examples 1 and 3 and Comparative Examples 1, 2, 4 ,6, and 7 and subjected to the above-described heat-resistance test as follows. Specifically, first, by using a fixed bed flow type reactor, 1.0 g of the oxidation catalyst (subjected to the heat-resistance test) was packed into a silica glass reaction tube having an inner diameter of 15 mm, and the oxidation catalyst was heated at 500 °C for 10 minutes, while CO (1000 ppm), C₃H₆ (500 ppmC: volume ratio in term of carbon), NO (100 ppm), O₂ (10% by volume), CO₂ (10% by volume), H₂O (10% by volume), and N₂ (the balance) were supplied to 1.0 g of the catalyst under a condition of 7000 ml/minute. Then, a sulfur component-containing gas obtained by adding SO₂ (30 ppm) to the model gas was further supplied to the oxidation catalyst under conditions of 7000 ml/minute and 500°C for 55.5 minutes. Next, the model gas containing no SO₂ was supplied to the oxidation catalyst, which had been supplied with the sulfur component-containing gas as described above, under conditions of 7000 ml/minute and 620°C for 10 minutes. Note that the amount of the sulfur component supplied to each oxidation catalyst during the supply of the sulfur component-containing gas was 2 g per 120 g of the catalyst, in terms of sulfur (S).

### <Sulfur Poisoning Recovery Test B>

A sulfur poisoning recovery test B was performed on the oxidation catalysts obtained in Examples 1 to 3 and Comparative Examples 1 and 3 and subjected to the heat-resistance test (but not subjected to the sulfur poisoning recovery test A). The sulfur poisoning recovery test B was the same as the above-described "Sulfur Poisoning Recovery Test A," except that the amount of SO₂ added to the sulfur component-containing gas was changed from 30 ppm to 120 ppm. Note that, in the sulfur poisoning recovery test B, the amount of the sulfur component supplied to each oxidation catalyst during the supply of the sulfur component-containing gas was 8 g per 120 g of the catalyst, in terms of sulfur (S).

### <Measurement of Oxidation Activities of Oxidation Catalysts Subjected to Sulfur Poisoning Recovery Test A or B>

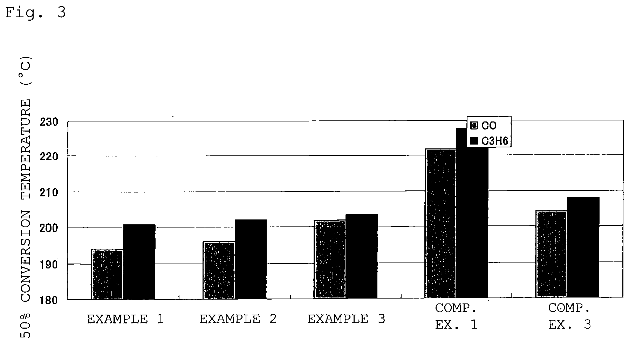

Oxidation activities were measured by using each of the oxidation catalysts (Examples 1 and 3 and Comparative Examples 1, 2, 4, 6, and 7) subjected to the sulfur poisoning recovery test A and the oxidation catalysts (Examples 1 to 3 and Comparative Examples 1 and 3) subjected to the sulfur poisoning recovery test B. Note that, in the measurement of the oxidation activities, the same method as that employed in the above-described "Measurement of Oxidation Activities of Oxidation Catalysts Subjected to Heat-Resistance Test" was employed, except that the oxidation catalysts subjected to the sulfur poisoning recovery test A and the oxidation catalysts subjected to the sulfur poisoning recovery test B were used instead of the oxidation catalysts subjected to the heat-resistance test. Fig. 2 shows the 50% conversion temperatures of CO and C₃H₆ of the oxidation catalysts subjected to the sulfur poisoning recovery test A, and Fig. 3 shows the 50% conversion temperatures of CO and C₃H₆ of the oxidation catalysts subjected to the sulfur poisoning recovery test B.

As is apparent from the results shown in Fig. 1, each of the oxidation catalysts obtained in Examples 1 to 3 had a 50% conversion temperature of CO of 210°C or below and a 50% conversion temperature of C₃H₆ of 215°C or below, after the heat-resistance test. In contrast, the oxidation catalyst obtained in Comparative Example 2 had a 50% conversion temperature of CO of 235°C and a 50% conversion temperature of C₃H₆ of 240°C, after the heat-resistance test. Thus, the 50% conversion temperatures of both CO and C₃H₆ of the oxidation catalysts obtained in Examples 1 to 3 took sufficiently lower values than those of the oxidation catalyst (catalyst in which platinum was supported on alumina) obtained in Comparative Example 2 in which an equal amount of platinum was supported. From this, it was found that the oxidation catalysts obtained in Examples 1 to 3 exhibited sufficiently high levels of CO and C₃H₆ oxidation activities, even after the heat-resistance test. In addition, it was found that the oxidation catalysts obtained in Examples 1 to 3 exhibited oxidation activities approximately equal to or superior to those of the oxidation catalyst (catalyst in which platinum was supported on alumina) obtained in Comparative Example 1 in which the amount of platinum supported was twice the amount of the oxidation catalysts obtained in Examples 1 to 3. These results showed that when a mixture of any one of the catalysts (A-1) to (A-3) in which copper oxide was supported on a titania-containing support with the catalyst (B-1) in which platinum was supported on alumina is used, the heat resistance was improved, and sufficiently high levels of oxidation activities were exhibited, in comparison with the cases where catalysts in which platinum was supported on alumina alone were used.

In addition, as is apparent from the results shown in Fig. 1, it was shown that the oxidation catalysts obtained in Examples 1 to 3 exhibited sufficiently higher levels of CO and C₃H₆ oxidation activities even after the heat-resistance test than the oxidation catalysts obtained in Comparative Examples 5 to 6 and containing the catalyst (C-5) in which platinum was supported on titania. From these results, it has been found that a sufficient heat resistance cannot be obtained when platinum is supported on titania. Note that, regarding these results, the present inventors speculate that when platinum was supported on titania, the specific surface area of the support decreased at high temperature, and hence the activities deteriorated.

In addition, it was shown that the oxidation catalysts obtained in Examples 1 to 3 exhibited sufficiently higher levels of CO and C₃H₆ oxidation activities even after the heat-resistance test than the oxidation catalyst obtained in Comparative Example 8 and made of the catalyst (C-7) in which copper oxide was supported on titania. From these results, it has been found that when a catalyst in which platinum is supported on alumina is used in combination with a catalyst in which copper oxide is supported on a titania-containing support, sufficiently high levels of oxidation activities are exhibited even after a heat-resistance test.

Moreover, as is apparent from the results shown in Fig. 1, the oxidation catalyst obtained in Comparative Example 7 had a 50% conversion temperature of CO of higher than 210°C, and a 50% conversion temperature of C₃H₆ of higher than 215°C, after the heat-resistance test. Hence, it was found that the oxidation catalysts obtained in Examples 1 to 3 exhibited higher levels of CO and C₃H₆ oxidation activities after the heat-resistance test than the oxidation catalyst obtained in Comparative Example 7 and made of the catalyst (C-6) in which copper oxide and platinum were co-supported on alumina. From these results, it has been found that a higher level of high-temperature durability can be obtained in a case where a titania-containing support is used as a support for supporting copper oxide, and an alumina-containing support is used as a support for supporting the noble metal than in a case where both copper oxide and the noble metal are supported on a single support.

In addition, as is apparent from the results shown in Fig. 2, each of the oxidation catalysts obtained in Examples 1 and 3 had a 50% conversion temperature of CO of 210°C or below and a 50% conversion temperature of C₃H₆ of 215°C or below, after the sulfur poisoning recovery test A. In contrast, each of the oxidation catalyst obtained in Comparative Examples 1, 2, 4, 6, and 7 had a 50% conversion temperature of CO of higher than 210°C, and a 50% conversion temperature of C₃H₆ of higher than 215°C, after the sulfur poisoning recovery test A. In addition, as is apparent from the results shown in Fig. 3, each of the oxidation catalysts obtained in Examples 1 to 3 had a 50% conversion temperature of CO of 205°C or below and a 50% conversion temperature of C₃H₆ of 205°C or below, after the sulfur poisoning recovery test B. In contrast, each of the oxidation catalysts obtained in Comparative Examples 1 and 3 had a 50% conversion temperature of CO of higher than 205°C, and a 50% conversion temperature of C₃H₆ of higher than 205°C, after the sulfur poisoning recovery test B. As is apparent from these results shown in Figs. 2 and 3, it was found that each of the oxidation catalysts obtained in Examples 1 to 3 exhibited sufficiently higher levels of CO and C₃H₆ oxidation activities and a sufficiently higher resistance to sulfur poisoning even after the sulfur poisoning than the oxidation catalysts obtained in Comparative Examples 1 to 4, 6 and 7. Particularly in the cases of the oxidation catalysts obtained in Comparative Examples 3 and 4, which achieved satisfactory results in terms of the high-temperature durability (see Fig. 1), the CO and C₃H₆ oxidation activities deteriorated, and sufficient oxidation activities were not obtained, after the sulfur poisoning. The oxidation catalysts obtained in Comparative Examples 3 and 4 had basically the same structure as that of the oxidation catalysts obtained in Examples 1 to 3, except that alumina (Comparative Example 3) or ceria (Comparative Example 4) was used as the support for supporting copper oxide. Hence, it has been found that the use of a titania-containing support as the support for supporting copper oxide improves the resistance to sulfur poisoning.

From these results, it has been found that a sufficiently high level of high-temperature durability and excellent resistance to sulfur poisoning can be simultaneously achieved by using a titania-containing support as the support for supporting copper oxide and an alumina-containing support as the support for supporting the noble metal.

### [Industrial Applicability]

As described above, the present invention makes it possible to provide the following oxidation catalyst, and a method for purification of exhaust gas using the oxidation catalyst. Specifically, the oxidation catalyst has a sufficiently high level of high-temperature durability which makes it possible to sufficiently suppress deterioration in catalytic performance due to high temperature, and has an excellent resistance to sulfur poisoning which makes it possible to sufficiently suppress deterioration in catalytic performance due to sulfur poisoning. Further, the oxidation catalyst is capable of having a sufficiently high level of oxidation activity in each of the cases of exposure to a high temperature of about 800°C, and of exposure to a sulfur component-containing gas (SOx).

Hence, the oxidation catalyst of the present invention is particularly useful as a catalyst for oxidizing and purifying carbon monoxide and hydrocarbons in exhaust gas emitted from an internal combustion engine of an automobile (particularly preferably, exhaust gas (gas of an oxidizing atmosphere) emitted from a diesel engine), and the like.

## Claims

1. An oxidation catalyst for removing, by oxidation, at least one of carbon monoxide and hydrocarbons contained in exhaust gas, comprising a mixture of:
a catalyst (A) comprising a first oxide support containing 25% by mass or more of titania, and copper oxide supported on the first oxide support; and
a catalyst (B) comprising a second oxide support containing 80% by mass or more of one or more oxides selected from alumina, ceria, and zirconia, and a noble metal supported on the second oxide support wherein
the first oxide support comprises at least one of titania, composite metal oxides having a titania content of 50% by mass or more, and titania-supporting materials in which titania is supported on a metal oxide at a ratio of 25% by mass or more
wherein
a mixing ratio of the catalyst (A) and the catalyst (B) in the mixture is 1:9 to 9:1 in terms of a mass ratio ((A):(B));
the copper oxide is supported on the first oxide support at a ratio of 1 to 30% by mass in the catalyst (A);
the noble metal is supported on the second oxide support at a ratio of 0.01 to 10% by mass in the catalyst (B).

2. The oxidation catalyst according to claim 1, wherein
the composite metal oxide is a composite metal oxide containing titania and at least one of zirconia, ceria, tin oxide, and niobium oxide.

3. The oxidation catalyst according to claim 1 or 2, wherein
the composite metal oxide is a composite metal oxide containing titania and zirconia.

4. The oxidation catalyst according to any one of claims 1 to 3, wherein
the metal oxide in the titania-supporting material is at least one of alumina, silica, ceria, and zirconia.

5. The oxidation catalyst according to any one of claims 1 to 4, wherein
the metal oxide in the titania-supporting material is alumina.

6. A method for purification of exhaust gas, comprising
bringing exhaust gas from an internal combustion engine into contact with the oxidation catalyst according to any one of claims 1 to 5, to thereby remove, by oxidation, at least one of carbon monoxide and hydrocarbons contained in the exhaust gas.

## Patentansprüche

1. Oxidationskatalysator zum Entfernen, durch Oxidation, von mindestens einem aus Kohlenmonoxid und Kohlenwasserstoffen, die in Abgas enthalten sind, umfassend ein Gemisch aus Folgendem:
einem Katalysator (A), umfassend einen ersten Oxidträger, der 25 Masse-% oder mehr Titandioxid enthält, und Kupferoxid, das auf dem ersten Oxidträger getragen wird; und
einen Katalysator (B), umfassend einen zweiten Oxidträger, der 80 Masse-% oder mehr von einem oder mehreren Oxiden enthält, ausgewählt aus Aluminiumoxid, Ceroxyd und Zirkondioxid, und ein Edelmetall, das auf dem zweiten Oxidträger getragen wird, wobei
der erste Oxidträger mindestens eines aus Titandioxid, Verbundmetalloxiden mit einem Titandioxidgehalt von 50 Masse-% oder mehr, und Titandioxid-Trägermaterialien, in denen Titandioxid auf einem Metalloxid in einem Anteil von 25 Masse-% oder mehr getragen wird, umfasst
wobei
ein Mischverhältnis des Katalysators (A) und des Katalysators (B) im Gemisch 1:9 bis 9:1 bezogen auf ein Masseverhältnis ((A):(B)) beträgt;
das Kupferoxid auf dem ersten Oxidträger in einem Anteil von 1 bis 30 Masse-% im Katalysator (A) getragen wird;
das Edelmetall auf dem zweiten Oxidträger in einem Anteil von 0,01 bis 10 Masse-% im Katalysator (B) getragen wird.

2. Oxidationskatalysator nach Anspruch 1, wobei
das Verbundmetalloxid ein Verbundmetalloxid ist, das Titandioxid und mindestens eines aus Zirkondioxid, Ceroxyd, Zinnoxid und Nioboxid enthält.

3. Oxidationskatalysator nach Anspruch 1 oder 2, wobei
das Verbundmetalloxid ein Verbundmetalloxid ist, das Titandioxid und Zirkondioxid enthält.

4. Oxidationskatalysator nach einem der Ansprüche 1 bis 3, wobei
das Metalloxid im Titandioxid-Trägermaterial mindestens eines aus Aluminiumoxid, Siliziumdioxid, Ceroxyd und Zirkondioxid ist.

5. Oxidationskatalysator nach einem der Ansprüche 1 bis 4, wobei
das Metalloxid im Titandioxid-Trägermaterial Aluminiumoxid ist.

6. Verfahren zur Reinigung von Abgas, umfassend
In-Kontakt-Bringen von Abgas aus einem Verbrennungsmotor mit dem Oxidationskatalysator nach einem der Ansprüche 1 bis 5, um dadurch durch Oxidation mindestens eines aus Kohlenmonoxid und Kohlenwasserstoffen, die in Abgas enthalten sind, zu entfernen.

## Revendications

1. Catalyseur à oxydation pour éliminer, par oxydation, au moins un de : monoxyde de carbone et hydrocarbures, contenus dans un gaz d'échappement, comprenant un mélange de :
un catalyseur (A) comprenant un premier support d'oxyde contenant 25 % en masse ou plus d'oxyde de titane, et de l'oxyde de cuivre supporté sur le premier support d'oxyde ; et
un catalyseur (B) comprenant un second support d'oxyde contenant 80 % en masse ou plus d'un ou de plusieurs oxydes sélectionnés parmi : alumine, oxyde de cérium, et zircone, et un métal noble supporté sur le second support d'oxyde dans lequel
le premier support d'oxyde comprend au moins un de : oxyde de titane, oxydes de métal composite, ayant une teneur en oxyde de titane de 50 % en masse ou plus, et matériaux de support d'oxyde de titane dans lesquels l'oxyde de titane est supporté sur un oxyde de métal à un rapport de 25 % en masse ou plus,
dans lequel
un rapport de mélange du catalyseur (A) et du catalyseur (B) dans le mélange est de 1:9 à 9:1 en termes d'un rapport de masse ((A):(B)) ;
l'oxyde de cuivre est supporté sur le premier support d'oxyde à un rapport d' 1 à 30 % en masse dans le catalyseur (A) ;
le métal noble est supporté sur le second support d'oxyde à un rapport de 0,01 à 10 % en masse dans le catalyseur (B).

2. Catalyseur à oxydation selon la revendication 1, dans lequel
l'oxyde de métal composite est un oxyde de métal composite contenant de l'oxyde de titane et au moins un de : zircone, oxyde de cérium, oxyde d'étain, et oxide de niobium.

3. Catalyseur à oxydation selon la revendication 1 ou 2, dans lequel
l'oxyde de métal composite est un oxyde de métal composite contenant de l'oxyde de titane et de la zircone.

4. Catalyseur à oxydation selon l'une quelconque des revendications 1 à 3, dans lequel
l'oxyde de métal dans le matériau de support d'oxyde de titane est au moins un de : alumine, silice, oxyde de cérium, et zircone.

5. Catalyseur à oxydation selon l'une quelconque des revendications 1 à 4, dans lequel l'oxyde de métal dans le matériau de support d'oxyde de titane est de l'alumine.

6. Procédé pour épuration de gaz d'échappement, comprenant
la mise d'un gaz d'échappement provenant d'un moteur à combustion interne en contact avec le catalyseur à oxydation selon l'une quelconque des revendications 1 à 5, pour ainsi éliminer, par oxydation, au moins un de : monoxyde de carbone et hydrocarbures, contenus dans le gaz d'échappement.
